Europäisches Patentamt

European Patent Office

Office européen des brevets

(19)

(11) **EP 0 605 296 B2**

(12) ## NOUVEAU FASCICULE DE BREVET EUROPEEN

(45) Date de publication et mention de la décision concernant l'opposition:
**10.11.2004 Bulletin 2004/46**

(51) Int Cl.7: **C01B 13/02**

(45) Mention de la délivrance du brevet:
**19.03.1997 Bulletin 1997/12**

(21) Numéro de dépôt: **93403148.5**

(22) Date de dépôt: **23.12.1993**

(54) **Installation d'alimentation en oxygène embarquée sur véhicule**

Sauerstoff-Versorgungseinrichtung, untergebracht im Fahrzeug

Oxygen supply installation embarked in vehicle

(84) Etats contractants désignés:
**AT BE CH DE DK ES FR GB GR IE IT LI LU MC NL PT SE**

(30) Priorité: **30.12.1992 FR 9215905**

(43) Date de publication de la demande:
**06.07.1994 Bulletin 1994/27**

(73) Titulaire: **CRYOTECHNOLOGIES
F-75008 Paris (FR)**

(72) Inventeur: **Feger, Damien
F-92402 Courbevoie Cedex (FR)**

(74) Mandataire: **Guérin, Michel et al
THALES Intellectual Property,
31-33, av. Aristide Briand
94117 Arcueil Cédex (FR)**

(56) Documents cités:
**EP-A- 0 443 259          EP-A- 0 510 877
WO-A-91/06691**

## Description

La présente invention concerne les installations d'alimentation en oxygène embarquées sur véhicules et notamment sur aéronefs.

L'oxygène présent à bord d'un véhicule tel qu'un aéronef, est utilisé principalement en tant que gaz respiratoire par les membres d'équipage et les passagers en cas de dépressurisation accidentelle de la cabine. Les aéronefs sont équipés d'équipements respiratoires de secours tels que des masques à oxygène. La réglementation peut imposer, à partir d'une certaine altitude, le port du masque à oxygène par au moins une partie des membres d'équipage.

On dispose actuellement de plusieurs types de source d'oxygène embarquée : il y a les réserves sous pression constituées d'une ou plusieurs bouteilles d'oxygène comprimé ou bien les générateurs chimiques. Un générateur fournit de l'oxygène lorsqu'on initiale une réaction chimique. La réaction chimique est irréversible et le générateur chimique doit ensuite être rechargé.

Sur les aéronefs, le bon fonctionnement des équipements respiratoires et de leur alimentation doit être testé avant chaque vol. Le gaz nécessaire pour effectuer les tests est prélevé sur une bouteille d'oxygène comprimé même dans le cas où il y a un générateur chimique.

Les compagnies aériennes doivent disposer d'une logistique contraignante et coûteuse pour assurer le remplacement ou le regonflage des réserves sous pression utilisées pour ces tests.

Il est aussi connu du document EP-A-0 510 877 une installation d'alimentation en oxygène sous pression qui utilise un générateur d'oxygène électrochimique. Ce dernier est relié à un compresseur mécanique qui délivre l'oxygène sous pression. Le document EP-A-0 443 259 montre le détail du générateur électrochimique. On connaît par le document WO 91/06691 un compresseur électrochimique d'oxygène qui comporte dans une enceinte étanche chauffée une membrane tubulaire avec un fond, équipée de deux électrodes l'une à l'intérieur et l'autre à l'extérieur de la membrane, un circuit d'amenée d'air qui injecte l'air à l'intérieur de la membrane, un circuit d'extraction de l'oxygène débouchant dans l'enceinte à l'extérieur de la membrane et un fil d'argent étendu sur la paroi intérieure de la membrane qui porte l'électrode intérieure.

La présente invention vise à remédier à ces inconvénients de fiabilité et de logistique. Une installation d'alimentation en oxygène, selon l'invention, embarquée sur véhicule peut être reliée à tout type de dispositif d'utilisateur. Elle fournit de l'oxygène à la demande. Elle permet de satisfaire les consommations d'oxygène du véhicule en période nominale, et donc de supprimer ou diminuer cette logistique, tout en étant fiable et en respectant les impératifs de sécurité.

La présente invention propose une installation d'alimentation en oxygène d'au moins un dispositif utilisateur, embarquée sur un véhicule telle qu'exposée dans la revendication 1.

Le dispositif utilisateur peut comporter un ou plusieurs équipements respiratoires qui sont également reliés à une seconde source d'oxygène.

Le dispositif utilisateur peut être un refroidisseur de type Joule-Thomson utilisant l'oxygène sous pression.

Le générateur électrochimique a un débit permettant de fournir l'oxygène utilisé pour tester les équipements respiratoires. Il permet aussi de fournir l'oxygène consommé par au moins une partie des membres d'équipage du véhicule.

Lorsque la seconde source d'oxygène est formée d'une réserve d'oxygène sous pression le générateur est prévu pour la regonfler.

L'invention sera mieux comprise à la lecture de la description des modes de réalisation suivants donnés à titre d'exemples non limitatifs. Cette description est illustrée par les figures annexées parmi lesquelles :

- La figure 1 représente une installation d'alimentation en oxygène embarquée sur aéronef selon l'invention ;
- La Figure 2 représente un détail de l'arrivée d'air dans un générateur électrochimique utilisé dans une installation selon l'invention ;
- La figure 3 représente une variante d'une installation selon l'invention ;
- La figure 4 représente une autre variante d'une installation selon l'invention.

Sur ces figures les mêmes références représentent les mêmes éléments. Dans un but de clarté les côtes ne sont pas respectées.

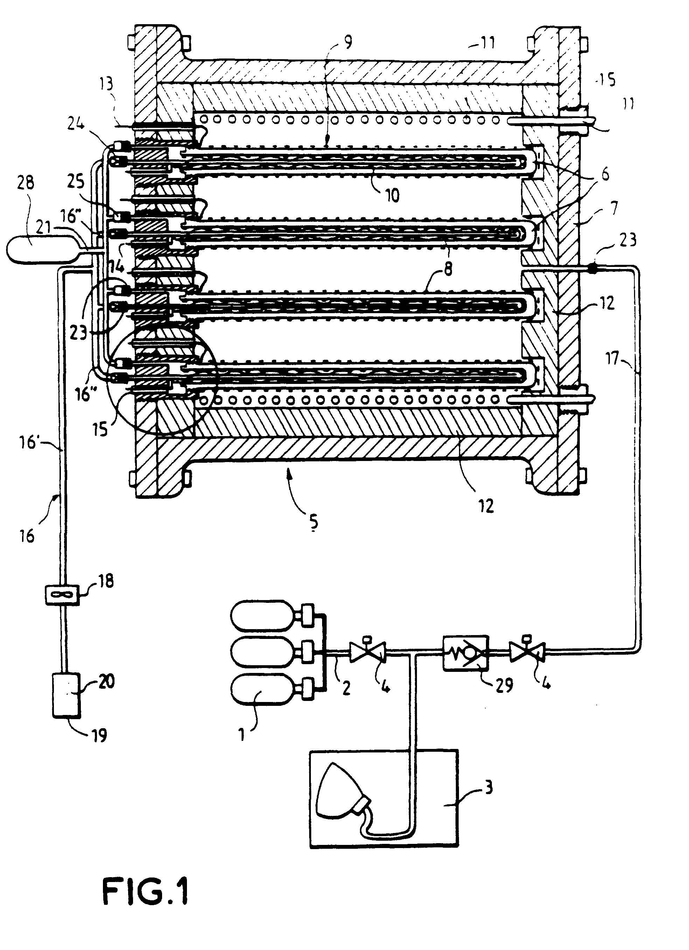

La figure 1 représente une installation d'alimentation en oxygène selon l'invention. Cette installation est embarquée sur un aéronef par exemple.

L'installation selon l'invention comporte un générateur électrochimique 5 qui fournit de l'oxygène sous pression à partir de l'air ambiant. Cet oxygène est destiné à alimenter un dispositif utilisateur 3. Sur cette figure, le dispositif utilisateur est un masque à oxygène destiné par exemple à un membre de l'équipage de l'aéronef. Dans la réalité le générateur 5 électrochimique sera relié à plusieurs équipements respiratoires tel que le masque représenté. Ils seront destinés aux passagers et aux membres d'équipage.

Le masque à oxygène 3 est relié par une canalisation 2 à une seconde source d'oxygène 1 constituée par exemple de bouteilles d'oxygène comprimé. Une vanne 4 qui est ouverte en cas de dépressurisation de l'aéronef permet à la seconde source d'oxygène 1 d'alimenter tous les équipements respiratoires.

L'oxygène fourni par le générateur électrochimique 5 alimente les équipements respiratoires 3 notamment lors des tests de vérification du fonctionnement des équipements respiratoires. Une autre vanne 4 est insérée entre le générateur 5 et les équipements respiratoires 3. Elle est ouverte lorsque le générateur électrochimique 5 leurs fournit de l'oxygène. Un détendeur non représenté est aussi prévu pour que l'oxygène au niveau du masque à oxygène soit à une pression appropriée.

Le générateur 5 regroupe dans un volume compact les fonctions d'extraction, de filtration et de compression.

Le principe de fonctionnement d'un générateur électrochimique est le suivant. Il consiste à ioniser l'oxygène gazeux contenu dans de l'air d'un côté d'une membrane de séparation suivant la réaction électrochimique suivante :

$$\tfrac{1}{2}\,O_2 + 2e^- \rightarrow O^{2-}$$

puis à faire traverser ces ions à travers la membrane à l'aide d'un champ électrique, puis à désioniser les ions de l'autre côté de la membrane suivant la réaction :

$$O^{2-} \rightarrow \tfrac{1}{2}\,O_2 + 2e^-$$

Le générateur électrochimique 5 comporte principalement un faisceau de membranes 6 tubulaires placées à l'intérieur d'une enceinte 7 étanche.

Les membranes 6 tubulaires ont de préférence un faible diamètre de manière à obtenir un rapport entre la surface d'échange ionique et le volume du compresseur le plus élevé possible. Elles sont de préférence réalisées à partir d'oxyde de zirconium ou zircone. D'autres oxydes susceptibles de se comporter comme un électrolyte solide à conduction ionique peuvent être utilisés, en particulier les oxydes dopés du quatrième groupe de la classification périodique. Les membranes sont isolantes électriquement.

Les membranes tubulaires 6 ont un fond et une extrémité ouverte. Les deux faces des membranes 6 sont recouvertes d'un revêtement poreux 8 électriquement conducteur. Une peinture au platine peut être utilisée. On a ainsi formé deux électrodes cylindriques, une anode 9 à l'extérieur de la membrane tubulaire 6 et une cathode 10 à l'intérieur de la membrane tubulaire 6.

La conduction ionique du matériau des membranes 6 étant maximale pour des températures de l'ordre de 800 à 1200°C, on prévoit un dispositif de chauffage électrique 11 à l'intérieur de l'enceinte 7 étanche. De plus, on tapisse l'intérieur de l'enceinte étanche 7 avec un revêtement 12 isolant thermique et réfractaire. Ce revêtement 12 peut être de l'alumine.

Un circuit d'amenée d'air 16 injecte de l'air frais à ]'intérieur des membranes 6. Ce circuit comporte un conduit commun 16' prolongé par des ramifications 16". Chaque ramification 16" est insérée dans une membrane 6 et a une extrémité ouverte à proximité du fond de la membrane. Le conduit commun 16' comporte une prise d'air 19 située par exemple dans l'aéronef. Un filtre à air 20 est de préférence prévu entre la prise d'air 19 et les ramifications 16". Un ventilateur 18 est souhaitable, de préférence sur le conduit commun 16' pour créer un courant d'air dans les membranes 6.

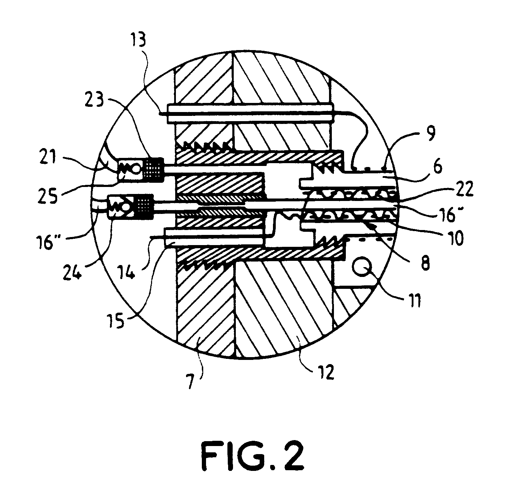

Des bornes d'alimentation électriques 14, 13 sont prévues pour porter respectivement la cathode 10 et l'anode 9 à des potentiels appropriés. L'oxygène présent dans l'air peut être extrait et transféré de la cathode 10 à l'anode 9 à travers chaque membrane 6. L'enceinte 7 est équipée de traversées étanches 15 permettant l'alimentation électrique des électrodes et du dispositif de chauffage. On peut se référer pour une meilleure compréhension à la figure 2 qui représente un détail de l'alimentation en air et de l'alimentation électrique des électrodes.

Du fait du revêtement isolant 12, la paroi de l'enceinte 7 et les passages étanches 15 restent à des températures proches de l'ambiante : les problèmes de tenue mécanique et d'étanchéité sont ainsi réduits.

La pression au niveau de la cathode 10 est plus basse que la pression au niveau de l'anode 11.

Dans l'enceinte, on a donc des zones basse pression à l'intérieur des membranes tubulaires 6 et des zones à haute pression à l'extérieur des membranes tubulaires. La pression côté anode peut être contrôlée en jouant sur le débit et la consommation d'oxygène.

Comme les électrodes 10, 11 sont cylindriques et qu'elles travaillent en compression, il n'est pas nécessaire de les supporter mécaniquement pour en assurer la tenue mécanique.

La tension aux bornes des électrodes pourra être typiquement de quelques volts. Elle est égale à la somme de la tension de polarisation des électrodes, de la tension due à la résistance électrique de la membrane et de la tension due à la différence de pression de part et d'autre de la membrane. Cette dernière tension est peu significative.

Pour optimiser l'alimentation électrique du générateur électrochimique, les électrodes de même nom peuvent être branchées en série pour présenter une tension d'alimentation à l'entrée du générateur plus élevée.

Un circuit d'extraction 17 débouchant dans l'enceinte 7 à l'extérieur des membranes tubulaires permet d'extraire l'oxygène sous pression du générateur. Ce circuit d'extraction 17 est relié au dispositif utilisateur 3.

Du côté basse pression, on prévoit un circuit d'évacuation 21 de l'air appauvri en oxygène qui débouche dans l'enceinte, du côté de la cathode, à l'opposé de l'extrémité libre des ramifications 16" du circuit d'amenée d'air 16. Ce circuit d'évacuation 21 peut comporter un circuit commun et des ramifications débouchant à proximité des membranes. On pourrait envisager d'inverser le circuit d'amenée d'air et le circuit d'évacuation. Le circuit d'évacuation 21 aurait ses ramifications insérées au fond des membranes 6. Le circuit d'amenée d'air 16 déboucherait dans l'enceinte du côté de la cathode 10, à l'opposé du fond des membranes. Il serait même possible de mélanger les deux variantes. Le ventilateur, la disposition du circuit d'amenée d'air 16 et du circuit d'évacuation 21 de l'air appauvri, permettent d'avoir un bon renouvellement de l'air riche en oxygène et une bonne évacuation de l'air appauvri.

Le circuit véhiculant l'air (16, 21) qui pénètre au fond des membranes est muni au niveau de ses ramifications d'un dispositif mécanique 22 assurant un grand nombre de contacts électriques entre la cathode 10 et les ramifications. Sur les figures 1 et 2 il s'agit d'un fil conducteur plié en zig-zag. Les ramifications sont réalisées en un matériau électriquement conducteur. On peut utiliser un alliage de type NC19FeNb connu sous la marque Inconel.

Ce dispositif mécanique 22 associé au revêtement conducteur poreux 8 assure une bonne répartition de l'intensité électrique sur la cathode 10. On a intérêt à augmenter au maximum cette intensité électrique par unité de surface car le débit d'oxygène par unité de surface du générateur est directement proportionnel à l'intensité. Il y a toutefois une limite à ne pas dépasser si l'on ne veut pas détruire le matériau de la membrane. Pour la zircone, cette intensité est de l'ordre de $1A/cm^2$ et correspond à un débit gazeux de $0,2 \, l/h.cm^2$ dans des conditions normales de température et de pression.

On prévoit des filtres 23 dans les circuits d'amenée d'air 16, d'évacuation 21 et d'extraction 17. Ces filtres 23 sont disposés de part et d'autre des membranes 6 de préférence à l'extérieur de l'enceinte. Ces filtres 23 seront avantageusement réalisés en bronze fritté. Sur les figures 1 et 2, on a représenté un filtre 23 par ramification du circuit d'amenée d'air 16 et par ramification du circuit d'évacuation 21, il pourrait y en avoir moins.

En cas de rupture d'une membrane 6, ces filtres 23 empêchent les débris de membrane de polluer les gaz injectés et extraits du générateur. Les débris peuvent être une cause d'ignition et une cause de dysfonctionnement d'autres organes éventuels placés sur ces conduits tels que des vannes, clapets, robinets ...

On prévoit aussi sur le circuit d'amenée d'air 16 au niveau des ramifications 16'', des clapets anti-retour 24. Ils ne laissent passer le flux gazeux que dans un sens, de l'extérieur de l'enceinte vers l'intérieur. Ces clapets 24 évitent, en cas de rupture d'une membrane 6, qu'un flux d'oxygène chaud ne s'échappe du compresseur 5 par le circuit d'amenée 16 d'air.

De préférence, sur le circuit d'évacuation 21 de l'air appauvri, en aval des membranes, on placera au moins un limiteur de débit 25. Ce limiteur de débit 25 laisse passer un flux de gaz (air appauvri) en fonctionnement normal. Lorsque la pression en amont du limiteur de débit 25 est supérieure à un seuil, il empêche le passage du flux de gaz. Sur la figure 1, on a représenté un limiteur de débit par ramification du circuit d'évacuation.

Ces limiteurs de débit 25 empêchent un échappement d'oxygène chaud par le circuit d'évacuation 21 en cas de rupture d'une membrane 6. Le confinement de l'oxygène chaud à haute pression est assuré. Ces clapets anti-retour 24 et ces limiteurs de débit 25 peuvent avoir un corps en inconel et un obturateur en saphir.

L'air appauvri en oxygène évacué peut être récupéré et utilisé pour rendre inerte des atmosphères explosives par exemple. Cet air appauvri en oxygène est riche en azote. On a représenté sur la figure 1 un réservoir de récupération 28 en bout du circuit d'évacuation 21.

Le générateur électrochimique 5 a un débit permettant d'utiliser l'oxygène lors des tests de bon fonctionnement des équipements respiratoires . On ne puise plus dans les bouteilles d'oxygène sous pression 1. Le débit du générateur permet aussi de fournir suffisamment d'oxygène pour alimenter les équipements respiratoires 3 destinés à au moins une partie des membres d'équipage, notamment lorsque les conditions de vol nécessitent le port du masque respiratoire par au moins une partie de l'équipage.

Lorsque la source d'oxygène est formée de bouteilles d'oxygène 1 sous pression, comme représenté sur la figure 1, le générateur électrochimique 5 peut les regonfler. Dans ce cas le circuit d'extraction 17 communique avec les bouteilles d'oxygène sous pression 1 par l'intermédiaire d'un clapet anti-retour 29. Les deux vannes 4 sont en position ouverte. Des moyens (non représentés) sont prévus pour neutraliser les équipements respiratoires.

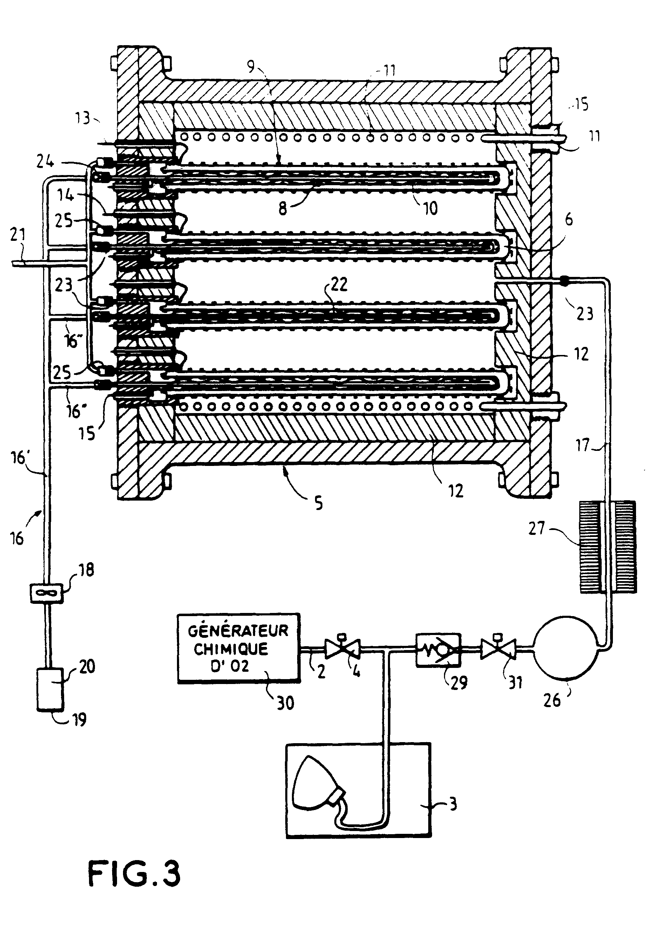

La figure 3 représente une variante d'une installation selon l'invention.

La seconde source d'oxygène est maintenant un générateur chimique d'oxygène et porte la référence 30. Il est relié aux équipements respiratoires 3 comme sur la figure 1.

Il peut être avantageux de placer dans le circuit d'extraction 17 une capacité tampon 26 associée à une vanne aval 31 pour stocker l'oxygène provenant du générateur électrochimique et compenser les fluctuations de consommation.

La vanne aval 31 est fermée lorsque l'on veut maintenir la capacité tampon 26 sous pression. Cette capacité tampon peut aussi être utilisée lorsque la source de gaz respiratoire est formée de bouteilles sous pression.

Le générateur électrochimique débite en continu dans la capacité tampon dès que suffisamment d'énergie est disponible dans l'aéronef, c'est-à-dire typiquement dès que le groupe auxiliaire de puissance est enclenché.

Lorsque l'on désire puiser dans la capacité tampon 26 pour alimenter le dispositif d'utilisation, on ouvre la vanne aval 31.

Si nécessaire, on peut prévoir sur le circuit d'extraction 17 un radiateur 27 pour refroidir l'oxygène qui sort du générateur électrochimique 5. Cela peut être le cas lorsque la longueur du circuit d'extraction entre le générateur et le dispositif utilisateur ne permet pas à l'oxygène de se refroidir suffisamment.

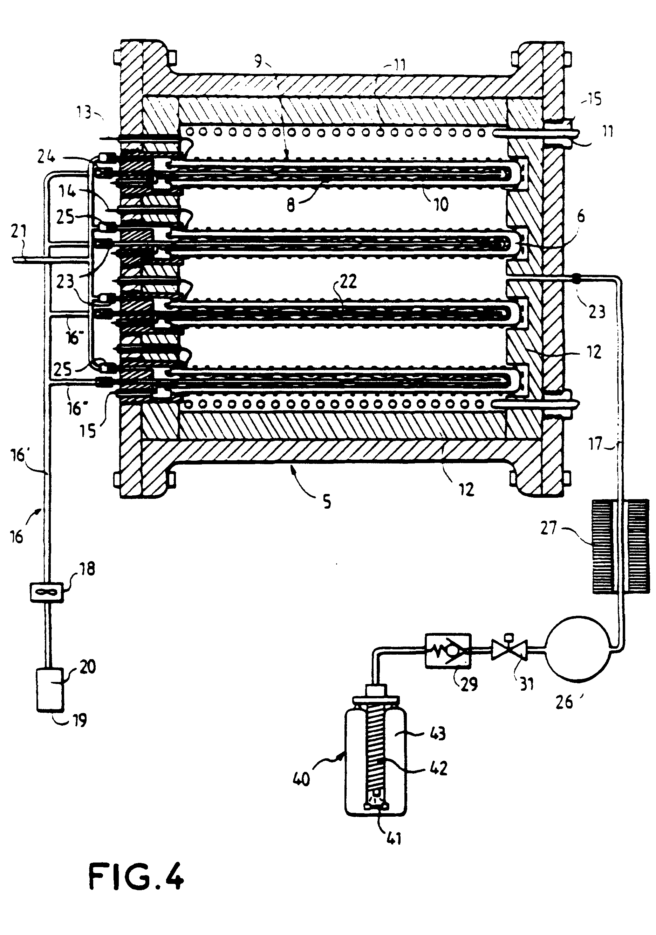

Sur la figure 4, le générateur électrochimique alimente maintenant en oxygène un refroidisseur 40 de type Joule-Thomson destiné à refroidir par exemple un détecteur infra-rouge 41. Les autres éléments de la figure situés en amont du refroidisseur 40 sont identiques à ceux de la figure 3. L'oxygène sous pression circule dans un serpentin 42 placé dans un cryostat 43. Il se détent à l'extrémité inférieure du serpentin en produisant du froid. On pourrait envisager que le générateur électrochimique 5 alimente en oxygène plusieurs dispositifs utilisateurs en combinant par exemple les figures 3 et 4. D'autres types de dispositifs utilisateurs peuvent bien sur être reliés au générateur électrochimique 5.

A titre d'exemple, un générateur électrochimique embarqué sur un aéronef capable de fournir de l'oxygène aux équipements respiratoires pour effectuer, avant chaque vol, les tests du bon fonctionnement pourrait avoir les caractéristiques suivantes :

- débit d'oxygène : 1 litre par minute (aux conditions normales de température et de pression)
- masse inférieure à 25 kg
- consommation électrique inférieure à 800 W
- volume inférieur à 20 litres
- temps moyen avant panne supérieur à 15000 heures.

Ce générateur ne comporte pas de pièce en mouvement, il présente une grande fiabilité, il ne nécessite aucune maintenance et ne génère pas de pollution de l'oxygène car il n'utilise pas de lubrifiant.

La description qui vient d'être faite concernait une installation d'alimentation oxygène embarquée sur un aéronef. On pourrait bien sur imaginer qu'elle soit montée dans un bâtiment naval submersible ou dans d'autres véhicules.

**Revendications**

1. Installation d'alimentation en oxygène d'au moins un dispositif utilisateur (3), embarquée sur un véhicule, comprenant un générateur électrochimique (5) d'oxygène extrayant l'oxygène à partir d'air, relié au dispositif utilisateur, ce générateur comportant dans une enceinte (7) étanche chauffée une pluralité de membranes (6) tubulaires perméables à l'oxygène avec deux électrodes (9, 10) par membrane, l'une (10) à l'intérieur et l'autre (9) à l'extérieur, et un circuit d'amenée (16) d'air, un circuit d'extraction (17) de l'oxygène et un circuit d'évacuation (21) de l'air appauvri en oxygène qui débouchent dans l'enceinte (7), **caractérisé en ce que**, le circuit d'amenée (16) d'air injecte de l'air ambiant à l'intérieur des membranes (6) qui sont tubulaires avec un fond, le circuit d'extraction (17) de l'oxygène, prévu pour extraire de l'oxygène sous pression, débouche dans l'enceinte à l'extérieur des membranes (6), le circuit d'évacuation (21) de l'air appauvri en oxygène débouche dans l'enceinte du côté de l'intérieur des membranes (6), et **en ce que** le circuit d'amenée (16) d'air comporte au moins un conduit (16") conducteur de l'électricité qui débouche au fond d'une membrane, un dispositif mécanique (22) étant prévu autour du conduit (16") pour assurer un grand nombre de contacts électriques entre le conduit (16") et l'électrode (10) intérieure à la membrane.

2. Installation selon la revendication 1, **caractérisée en ce que** le dispositif utilisateur (3) comporte un ou plusieurs équipements respiratoires qui sont reliés à une seconde source d'oxygène (1).

3. Installation selon l'une des revendications 1 ou 2, **caractérisée en ce que** le dispositif utilisateur est un refroidisseur de type Joule-Thomson (40).

4. Installation selon l'une des revendications 1 à 2, **caractérisée en ce que** le générateur électrochimique (5) a un débit permettant de fournir l'oxygène utilisé pour tester les équipements respiratoires (3).

5. Installation selon l'une des revendications 1 à 4, **caractérisée en ce que** le générateur électrochimique (5) a un débit permettant de fournir l'oxygène consommé par au moins une partie des membres d'équipage du véhicule.

6. Installation selon l'une des revendications 1 à 5, **caractérisée en ce que** le circuit d'amenée (16) de l'air est pourvu d'au moins un clapet anti-retour (24) pour assurer le confinement de l'oxygène en cas de rupture d'une membrane (6).

7. Installation selon l'une des revendications 1 à 6, **caractérisée en ce que** le circuit d'évacuation (21) de l'air appauvri en oxygène comporte au moins un limiteur de débit (25) pour assurer le confinement de l'oxygène en cas de rupture d'une membrane (6).

8. Installation selon la revendication 7, **caractérisée en ce que** l'air appauvri en oxygène est stocké dans un réservoir (28).

9. Installation selon l'une des revendications 1 à 8, **caractérisée en ce qu'**un ventilateur (20) disposé sur le circuit d'amenée (16) de l'air assure une bonne circulation de l'air à proximité de l'électrode (10) intérieure.

**10.** Installation selon l'une des revendications 1 à 9, **caractérisée en ce que** les circuits d'amenée de l'air, d'extraction de l'oxygène et d'évacuation de l'air appauvri en oxygène sont munis de filtres (23) pour retenir d'éventuels débris de membrane.

**11.** Installation selon l'une des revendications 1 à 10, **caractérisée en ce qu'**un réservoir tampon (26) associé à une vanne aval (31) sont prévus sur le circuit d'extraction (17) pour stocker l'oxygène sous pression lorsque la consommation du dispositif utilisateur (3) est nulle.

**12.** Installation selon l'une des revendications 1 à 11, **caractérisée en ce qu'**un dispositif de refroidissement (27) est prévu sur le circuit d'extraction (17) de l'oxygène.

**13.** Installation selon l'une des revendications 2 à 12, **caractérisée en ce que** la seconde source (1) d'oxygène est une réserve d'oxygène sous pression.

**14.** Installation selon la revendication 13, **caractérisée en ce que** le générateur électrochimique (5) est relié à la réserve d'oxygène sous pression (1) en vue de la remplir d'oxygène.

**15.** Installation selon l'une des revendications 2 à 12, **caractérisée en ce que** la seconde source d'oxygène est un générateur chimique d'oxygène (30).

**Patentansprüche**

**1.** Anlage zur Versorgung mindestens einer Verbrauchervorrichtung (3) auf einem Fahrzeug mit Sauerstoff, wobei die Anlage einen an die Verbrauchervorrichtung angeschlossenen elektrochemischen Sauerstoffgenerator (5) enthält, der Sauerstoff aus der Luft entnimmt und in einen dichten und beheizten Behälter (7) eine Mehrzahl von für Sauerstoff durchlässigen rohrförmigen Membranen (6), nämlich zwei Elektroden (9, 10) je Membran, eine (10) innerhalb und eine (9) außerhalb, und eine Luftzufuhrleitung (16), eine Sauerstoff-Extraktionsleitung (17) und eine Abfuhrleitung (21) für sauerstoffarme Luft aufweist, die in den Behälter (7) münden, **dadurch gekennzeichnet,**
**daß** durch die Luftzufuhrleitung (16) Umgebungsluft in die rohrförmigen und mit einem Boden versehenen Membrane (6) eingespeist wird, daß die Sauerstoff-Extraktionsleitung (17), die den Sauerstoff unter Druck entnehmen soll, in den Behälter außerhalb der Membranen (6) mündet, daß die Abfuhrleitung (21) für sauerstoffarme Luft in den Behälter (7) an der Innenseite der Membrane (6) mündet, und **daß** die Luftzufuhrleitung (16) mindestens eine elektrischen Strom leitende Leitung (16'') besitzt, die am Boden einer Membran mündet, wobei eine mechanische Vorrichtung (22) um die Leitung (16'') herum vorgesehen ist, um eine große Zahl von elektrischen Kontakten zwischen der Leitung (16'') und der Elektrode (10) in der Membran zu gewährleisten.

**2.** Anlage nach Anspruch 1, **dadurch gekennzeichnet, daß** die Verbrauchervorrichtung (3) mindestens eine Atemschutzeinrichtung enthält, die an eine zweite Sauerstoffquelle (1) angeschlossen ist.

**3.** Anlage nach einem der Ansprüche 1 oder 2, **dadurch gekennzeichnet, daß** die Verbrauchereinrichtung ein Kühler vom Typ Joule-Thomson (40) ist.

**4.** Anlage nach einem der Ansprüche 1 bis 2, **dadurch gekennzeichnet, daß** der elektrochemische Generator (5) einen Durchsatz besitzt, der es erlaubt, Sauerstoff zum Testen der Atemschutzeinrichtungen (3) zu liefern.

**5.** Anlage nach einem der Ansprüche 1 bis 4, **dadurch gekennzeichnet, daß** der elektrochemische Generator (5) einen Durchsatz besitzt, der es erlaubt, Sauerstoff zum Atmen für mindestens einen Teil der Besatzung des Fahrzeugs zu liefern.

**6.** Anlage nach einem der Ansprüche 1 bis 5, **dadurch gekennzeichnet, daß** die Luftzufuhrleitung (16) mindestens eine Rückschlagklappe (24) aufweist, um im Fall des Bruchs einer Membran (6) den Sauerstoff einzuschließen.

**7.** Anlage nach einem der Ansprüche 1 bis 6, **dadurch gekennzeichnet, daß** die Abfuhrleitung (21) für sauerstoffarme Luft mindestens einen Durchflußbegrenzer (25) enthält, um Sauerstoff im Fall des Bruchs einer Membran (6) einzuschließen.

**8.** Anlage nach Anspruch 7, **dadurch gekennzeichnet, daß** die sauerstoffarme Luft in einem Sammelbehälter (28) gespeichert wird.

**9.** Anlage nach einem der Ansprüche 1 bis 8, **dadurch gekennzeichnet, daß** ein Ventilator (20) in der Luftzufuhrleitung (16) liegt, um einen guten Luftumlauf in der Nähe der inneren Elektrode (10) zu gewährleisten.

**10.** Anlage nach einem der Ansprüche 1 bis 9, **dadurch gekennzeichnet, daß** die Luftzufuhrleitung, die Sauerstoff-Extraktionsleitung und die Abfuhrleitung für sauerstoffarme Luft mit Filtern (23) versehen sind, um eventuelle Bruchstücke einer Membran zurückzuhalten.

**11.** Anlage nach einem der Ansprüche 1 bis 10, **dadurch gekennzeichnet, daß** ein Pufferreservoir (26) mit einem ausgangsseitigen Ventil (31) an die Extraktionsleitung (17) angeschlossen ist, um den Sauerstoff unter Druck zu speichern, wenn der Verbrauch in der Verbrauchervorrichtung (3) Null ist.

**12.** Anlage nach einem der Ansprüche 1 bis 11, **dadurch gekennzeichnet, daß** eine Kühlvorrichtung (27) in der Sauerstoff-Extraktionsleitung (17) vorgesehen ist.

**13.** Anlage nach einem der Ansprüche 2 bis 12, **dadurch gekennzeichnet, daß** die zweite Sauerstoffquelle (1) eine Reserve für Sauerstoff unter Druck ist.

**14.** Anlage nach Anspruch 13, **dadurch gekennzeichnet, daß** der elektrochemische Generator (5) an die Reserve für Sauerstoff unter Druck (1) angeschlossen ist, um sie mit Sauerstoff wieder aufzufüllen.

**15.** Anlage nach einem der Ansprüche 2 bis 12, **dadurch gekennzeichnet, daß** die zweite Sauerstoffquelle ein elektrochemischer Sauerstoffgenerator (30) ist.

**Claims**

**1.** Installation for supplying oxygen to at least one user device (3), the installation being on board a vehicle, comprising an electrochemical oxygen generator (5) extracting oxygen from air and connected to the user device, this generator including, in a heated sealed chamber (7) a plurality of oxygen-permeable tubular membranes (6) with two electrodes (9,10) per membrane, one (10) on the inside and the other (9) on the outside, and an air intake circuit (16), a circuit (17) for extracting oxygen and a circuit (21) for discharging oxygen-depleted air which run into the chamber (7), **characterized in that** the air intake circuit (16) injects ambient air into the membranes (6) which are tubular with a closed end, the oxygen extraction circuit (17), provided for extracting pressurized oxygen, runs into the chamber on the outside of the membranes (6) and the circuit (21) for discharging oxygen-depleted air runs into the chamber on the inside of the membranes (6), and **in that** the air intake circuit (16) includes at least one electrically conducting pipe (16") running into the closed end of a membrane, a mechanical device (22) being provided around the pipe (16") to ensure that there are a large number of electrical contacts between the pipe (16") and the electrode (10) on the inside of the membrane.

**2.** Installation according to Claim 1, **characterized in**

**that** the user device (3) includes one or more breathing apparatuses which are connected to a second oxygen source (1).

**3.** Installation according to either of Claims 1 and 2, **characterized in that** the user device is a cooler (40) of the Joule-Thomson type.

**4.** Installation according to either of Claims 1 and 2, **characterized in that** the electrochemical generator (5) has a flow rate making it possible to provide the oxygen used for testing the breathing apparatuses (3).

**5.** Installation according to one of Claims 1 to 4, **characterized in that** the electrochemical generator (5) has a flow rate making it possible to provide the oxygen consumed by at least some of the crew members of the vehicle.

**6.** Installation according to one of Claims 1 to 5, **characterized in that** the air intake circuit (16) is provided with at least one check valve (24) in order to ensure that the oxygen is confined should a membrane (6) be ruptured.

**7.** Installation according to one of Claims 1 to 6, **characterized in that** the circuit (21) for discharging oxygen-depleted air includes at least one flow limiter (25) in order to ensure confinement of oxygen should a membrane (6) be ruptured.

**8.** Installation according to Claim 7, **characterized in that** the oxygen-depleted air is stored in a tank (28).

**9.** Installation according to one of Claims 1 to 8, **characterized in that** a fan (20) arranged in the air intake circuit (16) ensures that the air is well circulated in the vicinity of the inner electrode (10).

**10.** Installation according to one of Claims 1 to 9, **characterized in that** the air intake circuit, the oxygen extraction circuit and the circuit for discharging oxygen-depleted air are equipped with filters (23) in order to retain any membrane debris.

**11.** Installation according to one of Claims 1 to 10, **characterized in that** a buffer tank (26) associated with a downstream valve (31) are provided in the extraction circuit (17) in order to store the pressurized oxygen when there is no consumption by the user device (3).

**12.** Installation according to one of Claims 1 to 11, **characterized in that** a cooling device (27) is provided in the oxygen extraction circuit (17).

**13.** Installation according to one of Claims 2 to 12, **char-**

**acterized in that** the second oxygen source (1) is a pressurized-oxygen reserve.

14. Installation according to Claim 13, **characterized in that** the electrochemical generator (5) is connected to the pressurized-oxygen reserve (1) for the purpose of filling it with oxygen.

15. Installation according to one of Claims 2 to 12, **characterized in that** the second oxygen source is a chemical oxygen generator (30).

FIG.1

FIG.2

FIG.3

FIG.4